# EUROPEAN PATENT APPLICATION

(11) **EP 4 759 597 A1**
(43) Date of publication of application: **17.06.2026**
(21) Application number: 24219815.8
(22) Date of filing: 13.12.2024
(51) Int. Cl.: B60K 17/16, F16H 1/28, F16H 1/36, F16H 48/11, F16H 1/46, F16H 48/10

(54) **BEARING ARRANGEMENT FOR A DRIVING ARRANGEMENT OF A VEHICLE**

(71) Applicant: ZF Friedrichshafen AG, 88046 Friedrichshafen (DE)
(72) Inventor: Sun, Xujian, Shanghai, 201605 (CN)
(74) Representative: WBH Wachenhausen Patentanwälte PartG mbB

(57) **Abstract**

The disclosure relates to a bearing arrangement for a driving arrangement of a vehicle, comprising a gearing having a planetary gear device with a plurality of elements for transmitting torque and an output shaft. One of the elements (72) is non-rotatably connected to the output shaft. A further element (73, 81) is displaced with respect to the one element. The bearing arrangement comprises a supporting apparatus (40) for transmitting an axial force of the further element. The supporting apparatus extends from the further element toward the one element for transmitting an axial force of the further element to the one element in opposite axial directions.

## Description

### Technical field

The present disclosure refers to a bearing arrangement for a driving arrangement of a vehicle. The present disclosure also refers to a vehicle with a driving arrangement comprising such a bearing arrangement.

### Prior art

Transmissions or gearings are known in which planetary gear sets are used to convert an input value of an input shaft, for example a torque or a rotational speed, into an output value of an output shaft. In some designs, a planetary carrier of the gearing may be non-rotatably connected to the output shaft in order to transmit torque.

### Summary of the invention

The present disclosure refers in a first aspect to a bearing arrangement for a driving arrangement of a vehicle. The bearing arrangement comprises a gearing. Examples for the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving an input shaft of the gearing. The driving unit may comprise an internal combustion engine and/or an electric motor. The driving unit may receive electric energy from an energy storage, for example a tank or a battery, and convert it to rotational mechanical energy. The rotational mechanical energy may be input into the gearing as a driving torque. The vehicle may comprise a shiftable transmission disposed in a torque flow between the driving unit and the gearing.

The gearing comprises a planetary gear device with a plurality of elements for transmitting torque. The planetary gear device may comprise one, two or more planetary gear sets. For example, the gearing may comprise exactly two planetary gear sets. Additionally, the gearing may comprise a spur gear, a bevel gear or other suitable gears. The gearing also comprises an output shaft. The elements for torque transmission may be configured for providing mechanical operative connections between different elements of the gearing. If two elements are mechanically operatively connected, the elements are directly or indirectly coupled to one another such that a movement of the one element brings about a reaction of the other element. A mechanical operative connection may be produced, for example, by frictional engagement or positive engagement. The mechanical operative connection can correspond to a meshing engagement between corresponding toothed wheels of the two elements. Further elements, such as one or a plurality of spur gear stages, may be present between the elements. By contrast, a permanently non-rotatable connection is a connection in which the two elements are rigidly coupled to one another with respect to a rotational motion. The elements may be configured integrally or as separate elements that are non-rotatably connected to one another. A non-rotatable connection between two elements can also be produced by a shifting element, for example a clutch or a brake. The non-rotatable connection may be produced when the shifting element is actuated. The non-rotatable connection may be released when the shifting element is no longer actuated.

The gearing may be configured for converting an input value of the input shaft to an output value for the output shaft. For example, the gearing may be configured for converting an input rotational speed into a lower or higher output rotational speed and an input torque into a higher or lower output torque. Each element for torque transmission may comprise a plurality of teeth that mesh with compatible teeth of another element. The gears may be formed, for example, as internal, external or crown gears. The teeth may be formed, for example, as straight-cut teeth, helical teeth or worm teeth. The gearing may comprise a further output shaft, separate from the output shaft. The gearing may be configured for distributing a power of the input shaft between the output shaft and the further output shaft. Further, the gearing may provide a differential function between the two output shafts. The gearing may be of coaxial design, wherein the input shaft and the output shaft or output shafts are arranged coaxially along a central axis defining an axial direction. A radial direction of the bearing arrangement may be provided perpendicularly to the axial direction.

One of the elements of the planetary gear device of the gearing is non-rotatably connected to the output shaft. The one element may be, for example, a sun gear, a planetary carrier or a ring gear. The one element of the planetary gear device may be non-rotatably connected to the output shaft in order to transmit a torque to the output shaft. The non-rotatable connection may be configured to be releasable. The non-rotatable connection may be configured to permit or prevent displacements in at least one axial direction of the output shaft. The non-rotatable connection may be configured, for example, as a positive locking or frictional locking connection. Examples of a positive locking connection comprise a spline, a polygonal profile, a toothed shaft profile or a connection with the aid of a driver element, such as, for example, a feather key. Examples of a frictional locking connection comprise a connection with an interference fit, with a clamping element or with a tapered interference fit. Alternatively, the non-rotatable connection may be provided by integrally forming the one element of the planetary gear device with the output shaft.

A further element of the planetary gear device is displaced with respect to the one element of the planetary gear device. The further element is different from the one element that is non-rotatably connected to the output shaft. For example, the further element may be a coupling element which mechanically couples two planetary gear sets of the gearing. For example, the coupling element may couple the two planetary gear sets by forming the sun gear of a first planetary gear set and the ring gear of a second planetary gear set, wherein said sun gear and said ring gear may be integrally formed by said coupling element.

The bearing arrangement comprises a supporting apparatus. The supporting apparatus is configured for transmitting an axial force of the further element of the planetary gear device. The supporting apparatus may be formed from one or more elements. In one configuration, the supporting apparatus may be monolithically formed from a single element. The supporting apparatus may be attached to the one element or the further element of the planetary gear device. The supporting apparatus may be mechanically operatively connected, for example permanently non-rotatably connected, to the one element or the further element of the planetary gear device. The non-rotatable connection may be formed by a positive locking, frictional locking and/or integrally bonded connection as described above. Alternatively or additionally, the supporting apparatus may be non-rotatably connected to the one element or the further element via a press fit. Alternatively or additionally, the supporting apparatus may be welded and/or adhesively bonded to the one element or the further element in order to form the non-rotatable connection.

The supporting apparatus extends from the further element to the one element for transmitting an axial force of the further element to the one element in opposite axial directions. In other words, forces of the further element in both axial directions are transferable to the one element of the planetary gear device via the supporting apparatus. In an embodiment, the support apparatus extends radially inward, i.e. toward a smaller diameter, from the further element of the planetary gear device, e.g. into a gap described below. The axial forces of the further element of the planetary gear device that are transferred to the one element may be supported directly or indirectly with respect to a stationary member. For example, the one element of the planetary gear device may introduce the axial forces into the output shaft, which in turn may introduce them into a fixed bearing. In order to introduce the axial forces into the fixed bearing, the output shaft may comprise, for example, a step, a retaining ring, a shaft ring or a shaft nut.

The fixed bearing may be configured for introducing the axial forces into the housing portion of a stationary member. The stationary member may be, for example, a housing in which the gearing and/or at least one shaft is fully or partially accommodated. The stationary member may comprise a plurality of housing portions. The fixed bearing may be configured as a bearing which can receive axial forces in the corresponding axial direction at least on one side. The fixed bearing may also be configured for receiving radial forces or be configured as a pure one-sided axial bearing. Examples of one sided axial bearings comprise angular contact ball bearings, conical bearings, cylindrical roller bearings with one-sided flange, tapered roller bearings, axial roller bearings and axial plain bearings. In another configuration, the fixed bearing can receive axial forces in both axial directions. Examples of such fixed bearings comprise axially fixed ball bearings and cylindrical roller bearings with a two-sided flange. If both the output shaft and the one element of the planetary gear device comprise a fixed bearing, the fixed bearings of the output shaft and of the one element of the planetary gear device may be identical to or different from one another.

With the bearing arrangement of the first aspect, axial forces are effectively transferred from the further element of the planetary gear device to the one element of the planetary gear device. Due to gearing ratios between elements of the gearing, there may be a relative rotational speed between the one and the further elements. The relative rotational speed can have a value, for example, between 0.05 and 0.35 of the drive rotational speed of the bearing arrangement. The relative rotational speed may be, for example, between 0.15 and 0.25. In one configuration, the relative rotational speed may be 0.2. In view of the low relative rotational speed, wear on the supporting apparatus and the planetary gear device can be low. Thus, the first aspect of the present disclosure provides a bearing arrangement with high durability.

In an embodiment, the bearing arrangement comprises a holding apparatus. The holding apparatus may be formed from one or more elements. In one configuration, the holding apparatus may be monolithically formed from a single element. The holding apparatus may be attached or mechanically operatively connected, for example permanently non-rotatably connected, to the one element of the planetary gear device. The non-rotatable connection may be formed by a positive locking, frictional locking and/or integrally bonded connection as described above. By way of example, the holding apparatus may be attached to the one element of the planetary gear device by a fixing means, for example screws. Alternatively or additionally, the holding apparatus may be non-rotatably connected to the one element via a press fit. Alternatively or additionally, the holding apparatus may be welded and/or adhesively bonded to the one element in order to form the non-rotatable connection.

The holding apparatus is configured to mount the supporting apparatus in a gap formed between the holding apparatus and one of the one element and the further element of the planetary gear device without any axial play. The gap may be formed, for example, between a supporting portion of the one or the further element of the planetary gear device, via which a movement of the element in one axial direction may be limited, and a supporting portion of the holding apparatus, via which a movement of the element in the other axial direction may be limited. The supporting apparatus is mounted in the gap in order to receive the axial forces of the further element of the planetary gear device. The bearing arrangement may be configured, for example, in such a way that a tight fit is provided that substantially prevents any axial play. Alternatively, in an initial state, the supporting apparatus may be arranged in the gap at a distance from one or both of the elements which delimit the gap, in order to allow play in one or both axial directions. In both cases, the bearing arrangement may be configured in such a way that the supporting apparatus extends into the gap, in which it is mounted, in order to receive the axial force of the further element of the planetary gear device. For example, the supporting apparatus may be configured in such a way that it can transmit the axial forces of the further element of the planetary gear device to either one or both of the one element of the planetary gear device and the holding apparatus.

In some cases, a relative rotation may be present between the supporting apparatus and the one element and/or the further element of the planetary gear device. In such cases, the transfer of axial forces may be improved by means of a plain bearing for receiving the axial force while facilitating relative rotation. The plain bearing may be formed between the supporting apparatus and a surface or surfaces which delimit the above-described gap or a further gap. The plain bearing may be lubricated by a lubricant, for example oil. By way of example, a plain bearing for receiving the axial forces may be formed in each case between the supporting apparatus and the one or further element of the planetary gear device and between the supporting apparatus and the holding apparatus, in a dry state or by means of the lubricant. Alternatively or additionally, a separate bearing, such as a rolling bearing, may be provided between the supporting apparatus and one or both surfaces which delimit the above-described gap or a further gap, in order to receive the axial force of the further element of the planetary gear device in the respective axial direction. In one configuration, however, further bearings, for example rolling bearings and/or needle bearings, may be dispensed with completely in the case of the mounting of the further element of the planetary gear device in the axial direction, with the result that the mounting of the element in the axial direction takes place merely via the above-described arrangement in the above-described gap.

In an embodiment, the other one of the one element and the further element of the planetary gear device, i.e. the one which does not form the gap together with the holding apparatus, comprises a further gap to provide an axial play for the supporting apparatus. Accordingly, said other element may be configured in such a way that the supporting apparatus exhibits a play in the axial direction, i.e. may move in the axial direction. Said further gap may be axially delimited on one axial side by means of a retaining ring. The retaining ring may serve as a separate element for forming and delimiting the further gap. Exemplary configurations of the retaining ring include an axially assembled ring, a radially assembled ring and a snap ring. With such a configuration, an assembly of the supporting apparatus is simple. The further gap may be delimited in the axial direction on the other axial side, i.e. the side opposite the retaining ring, by the other one of the one element and the further element.

In one embodiment, the supporting apparatus is permanently non-rotatably connected to the other one of the one element and the further element of the planetary gear device. The non-rotatable connection may be formed by a positive locking, frictional locking and/or integrally bonded connection as described above. In one example, the non-rotatable connection may be formed by teeth radially extending from an outer circumference of the supporting apparatus into corresponding grooves provided in the other one of the one element and the further element. The supporting apparatus may extend into the further gap formed on a radially inner surface of the further element of the planetary gear device. For example, the further gap may be formed on one axial side by a supporting portion formed in the further element of the planetary gear device. The supporting portion may be formed as a stepped portion of the further element of the planetary gear device. For example, the further gap may be formed on the other axial side by a separate element, e.g. the retaining ring described above. Alternatively, the further gap may be formed on the other axial side by a further supporting portion formed in the further element of the planetary gear device. For example, the gap and the further gap are configured such that one of them allows axial play in both directions and the other prevents axial play. With such a configuration, a defined axial play between the one element and the further element of the planetary gear device can be provided in a simple manner

In an embodiment, the holding apparatus mounts the supporting apparatus to the one element of the planetary gear device that is non-rotatably connected to the output shaft. In another embodiment, the holding apparatus mounts the supporting apparatus to the further element of the planetary gear device.

In an embodiment, the supporting apparatus is configured as a plate-shaped member. The plate-shaped member may have a width and a length which are much greater than its thickness. The plate-shaped member may have, for example a substantially flat shape, a substantially conical shape or a combination of these two shapes. In one configuration, a cross section of the plate-shaped member may be formed as two radially extending sections which are offset along an axial direction and are connected by an obliquely extending section. The plate-shaped member may be a rolled, punched and/or pressed product made, for example, of metal. By means of the present embodiment, the supporting apparatus is provided with a simple configuration.

In an embodiment, the holding apparatus is configured as a plate-shaped member. The structure of the plate-shaped member forming the holding apparatus may be configured as described above for the plate-shaped member forming the supporting apparatus. The holding apparatus may comprise a radially extending section covering an axial surface of the one element. The holding apparatus may comprise an axially extending section forming the above-described supporting portion of the holding apparatus. In one example, the holding apparatus may be formed as a baffle plate fixed to the one element of the planetary gear device and configured for churning lubricant when being rotated.

In one embodiment, the supporting apparatus comprises a treatment for improving the mechanical properties. The treatment may be provided on at least one axial side in the region of the gap described above. Alternatively, the treatment may be provided on both axial sides. In case a further gap is present, the treatment may be provided on one or both axial sides in the region of the further gap in addition to or in place of the treatment in the region of the gap. In one configuration, the treatment may be provided on both axial sides in the region of the gap. In one configuration, the treatment may be provided on both axial sides in the region of the further gap. In one configuration, the treatment may be applied to the whole supporting apparatus. The treatment may be provided so as to improve at least some mechanical properties in a contact region between the supporting apparatus and further elements. The treatment may comprise, for example, a hardening of the supporting apparatus. The hardening may include, for example, phosphatization for reducing wear and/or improving corrosion resistance and/or lubrication. The phosphatization may involve, for example, iron, zinc, or manganese phosphates. The hardening may be carried out, for example, by a sintering of the supporting apparatus in the respective region. As a result of the provision of the treatment for improving the mechanical properties, wear of the supporting apparatus, which wear can occur to an increased extent on account of a relative rotational speed between the supporting apparatus and the further components may be significantly reduced.

In an embodiment, a plurality of elements of the planetary gear device mesh with one another with helical teeth. By way of example, the further element of the planetary gear device, which is coupled to the supporting apparatus, may mesh with two elements of the planetary gear device, for example with elements of two different planetary gear sets, in case the further element functions as a coupling element as described above. These two meshing engagements of the further element may be configured as helical teeth. The helical teeth of the elements of the planetary gear device are adapted to one another such that the axial forces which are applied by them to the further element of the planetary gear device substantially cancel each other out. This can mean that the gearing is constructed in such a way that no axial forces are applied to the further element of the planetary gear device. Nevertheless, residual or low axial forces can occur on the further element of the planetary gear device, for example on account of manufacturing tolerances, which axial forces can then be retained axially via the supporting apparatus. The present embodiment results in a reduction of the friction losses and wear in the axial mounting of the further element.

In an embodiment, the planetary gear device of the gearing comprises a first planetary gear set, a second planetary gear set that is mechanically coupled to the first planetary gear set and an input shaft. The input shaft is mechanically coupled to one of the planetary gear sets, wherein the output shaft is mechanically coupled to one of the planetary gear sets. Both planetary gear sets may each comprise a first element, a second element and a third element. A torque may be introduced into the gearing via the first element of the first planetary gear set, for example via an input shaft. The third element of the first planetary gear set may be permanently non-rotatably connected to the first element of the second planetary gear set. The second element of the second planetary gear set may be permanently non-rotatably fixed to a stationary member. The output shaft may be permanently non-rotatably connected to the second element of the first planetary gear set. The third element of the second planetary gear set may be permanently non-rotatably connected to the second element of the first planetary gear set or to a further output shaft. The output shaft and the further output shaft may be coaxially arranged to each other and/or the planetary gear device.

In one configuration, the third element of the second planetary gear set may be permanently non-rotatably connected to the second element of the first planetary gear set, resulting in a gearing with one output shaft provided with a high gear ratio, for example reduction ratio, between the input shaft and the output shaft. In an alternative configuration, the third element of the second planetary gear set may be permanently non-rotatably connected to a further output shaft, resulting in a gearing with two output shafts for splitting an input power of the input shaft between the output shaft and the further output shaft. Furthermore, a differential functionality may be provided by the planetary gear device having two output shafts. Additionally or alternatively, a separate differential may be provided downstream of the gearing, namely in a torque flow between the gearing and the drive elements of the vehicle.

By providing a gearing comprising two planetary gear sets in the manner described above, the two planetary gear sets may be arranged one behind the other in an axial direction. Such an axially stacked configuration makes it possible to provide a gearing that is compact, especially in the radial direction. In an alternative embodiment, the two planetary gear sets of the gearing may be arranged one behind the other in the radial direction, but at the same axial height. Such a radially stacked configuration enables a gearing that is particularly compact, especially in the axial direction. In both cases, it is possible to provide high gear ratios with a simple and compact design. For example, the absolute value of a gear ratio between the input shaft and one or two output shafts may be ≧3 and ^10. In an example for the above-described configuration with a single output shaft, where the third element of the second planetary gear set is coupled to the second element of the first planetary gear set, even gear ratios ≧10 can be provided. The gearing of the present embodiment provides high reduction ratios which allow for, for example, a fast-rotating traction motor with a compact configuration.

In an embodiment, the first elements of the two planetary gear sets are each configured as a sun gear. The second elements of the two planetary gear sets are each configured as a planetary carrier. The third elements of the two planetary gear sets are each configured as a ring gear. The respective planetary gear set may be a plus or minus planetary gear set. Each of the planetary gear sets may comprise planet gears which may be mounted rotatably on the respective planetary carrier of the planetary gear set. The planet gears may mesh both with the sun gear and with the ring gear of the respective planetary gear set. Furthermore, a coupling shaft may be provided which forms a sun-ring-gear that forms both the ring gear of the first planetary gear set and the sun gear of the second planetary gear set. Such a design leads to a gearing having the advantages described above with a low complexity.

In an embodiment, the one element of the planetary gear device is the second element of the first planetary gear set, and the further element of the planetary gear device is the third element of the first planetary gear set. Thereby, the axial force may be effectively transmitted from the third element of the first planetary gear set to the second element of the first planetary gear set, the second element being mechanically coupled to the output shaft.

A second aspect of the disclosure refers to a vehicle comprising a bearing arrangement according to the first aspect. Respective advantages and further features may be gathered from the description of the first aspect, wherein embodiments of the first aspect also form embodiments of the second aspect and vice versa.

### Brief description of drawings

Figure 1 shows a vehicle with a gearing according to an embodiment.
Figure 2 schematically shows a general layout of a gearing applicable to the vehicle of Figure 1.
Figure 3 schematically shows a cross section of a gearing with a bearing arrangement according to an embodiment.
Figure 4 schematically shows another general layout of a gearing applicable to the vehicle of Figure 1.
Figure 5 schematically shows a cross section of a gearing with a bearing arrangement according to an embodiment.

### Detailed description of embodiments

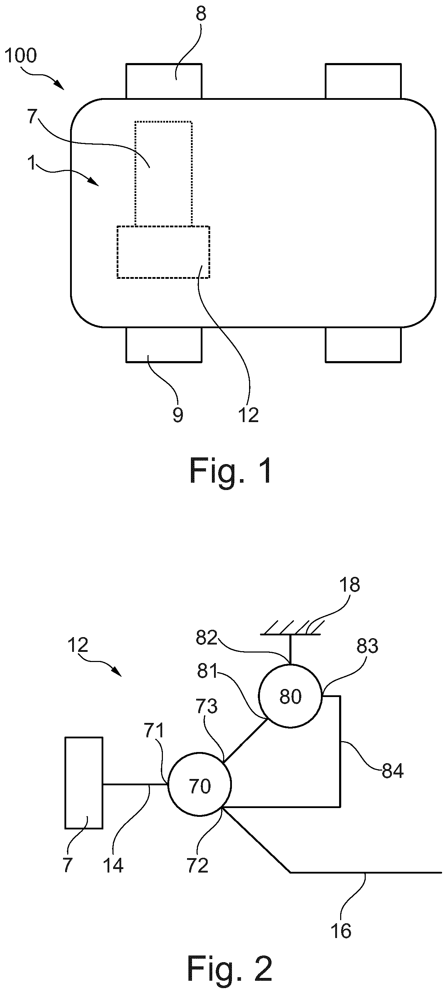

Figure 1 shows a vehicle 100 with a driving arrangement 1 comprising a gearing 12 according to an embodiment of the present disclosure. The gearing 12 is driven by a driving unit 7 and is configured for transferring power input by the driving unit 7 to at least two drive elements 8, 9. In the present embodiment, the driving unit 7 is an electric motor, and the drive elements 8, 9 are wheels of the vehicle 100. Specifically, a first drive element 8 corresponds to a left wheel of the vehicle, and a second drive element 9 corresponds to a right wheel of the vehicle.

Figure 2 schematically shows a general layout of the gearing 12 according to an embodiment of the present disclosure. The gearing 12 is a gearing with planetary gear device comprising two planetary gear sets. As can be seen from Figure 2, the planetary gear device of the gearing 12 comprises a first planetary gear set 70 having a first element 71, a second element 72 and a third element 73. Furthermore, the gearing 12 comprises a second planetary gear set 80 having a first element 81, a second element 82 and a third element 83. A torque of the driving unit 7 can be introduced into the gearing 12 via the first element 71 of the first planetary gear set 70. In the present embodiment, an input shaft 14 driven by the driving unit 7 is mechanically operatively connected to the first element 71 of the first planetary gear set 70, here permanently non-rotatably connected, for the purpose of introducing torque into the gearing 12. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 15. An output shaft 16 is mechanically operatively connected to the second element 72 of the first planetary gear set 70, in this case permanently non-rotatably connected. In the present embodiment, the third element 83 of the second planetary gear set 80 is mechanically operatively connected, in this case permanently non-rotatably connected, to a coupling element 84. The coupling element 84 is presently permanently non-rotatably connected to the second element 72 of the first planetary gear set 70. Accordingly, Figure 2 shows a gearing 12 with exactly one output shaft 16.

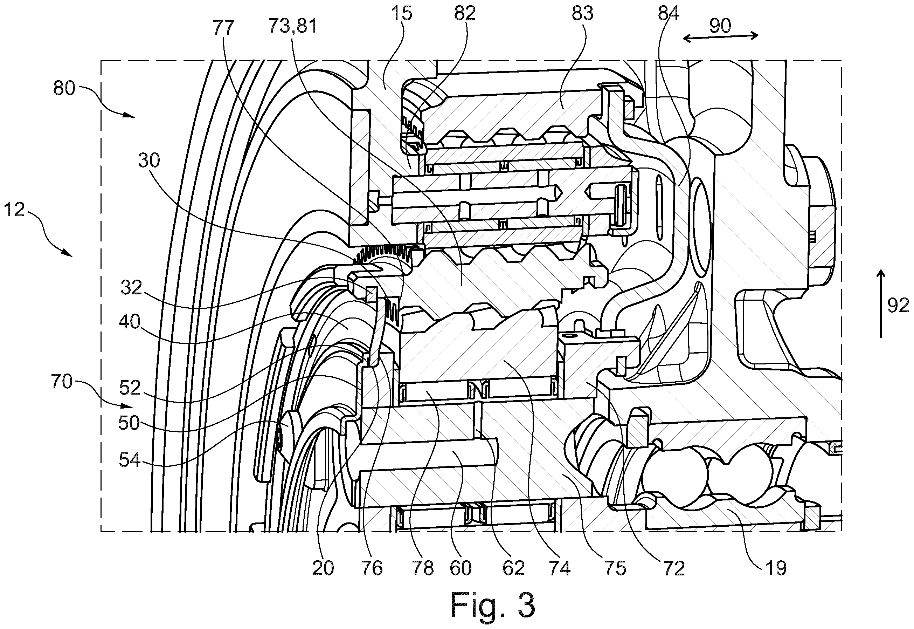

Figure 3 schematically shows a bearing arrangement of a driving arrangement 1 comprising a gearing 12 which is interconnected according to the general layout of Figure 2. In the embodiment of Figure 3, the first elements 71 (not shown) and 81 of the first planetary gear set 70 and of the second planetary gear set 80 are each configured as a sun gear. The second elements 72 and 82 of the first planetary gear set 70 and of the second planetary gear set 80 are each configured as a planetary carrier. The third elements 73 and 83 of the first planetary gear set 70 and of the second planetary gear set 80 are each configured as a ring gear. In the embodiment of Figure 3, the first planetary gear set 70 and the second planetary gear set 80 are arranged in a radially stacked manner. This means that the first planetary gear set 70 is arranged radially completely within the second planetary gear set 80. At the same time, the first planetary gear set 70 and the second planetary gear set 80 are provided at the same axial structural height of the gearing 12.

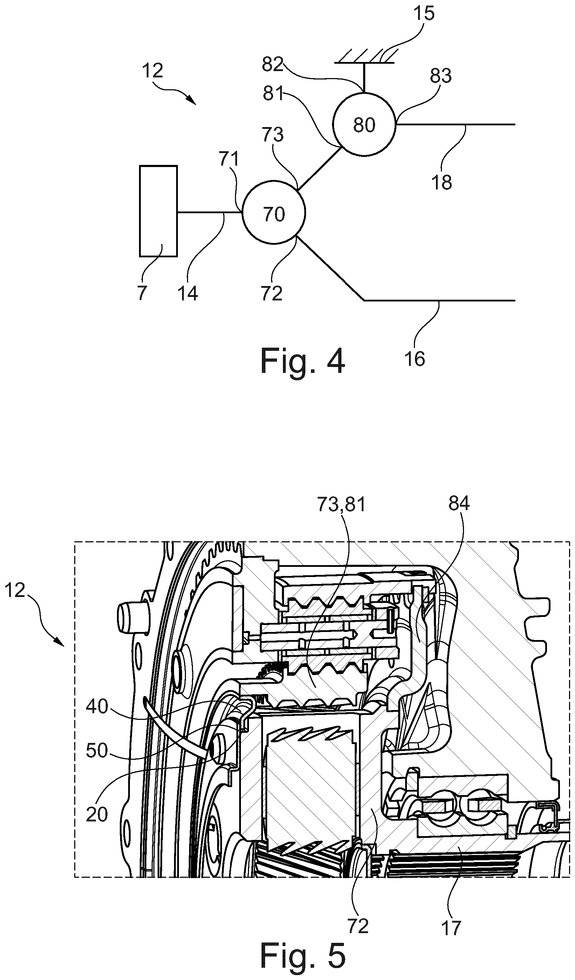

As described in conjunction with the interconnection of Figure 2, the planetary carrier 72 of the first planetary gear set 70 is non-rotatably connected to the output shaft 16 (not shown in Figures 3 and 5). In the present embodiment and in the embodiment of Figure 5, the planetary carrier 72 of the first planetary gear set 70 is permanently non-rotatably connected to the output shaft 16 by means of a spline 17 (visible in Figure 5). The gearing 12 also comprises the input shaft 14 (not shown in Figures 3 and 5) for introducing a torque into the gearing 12. The input shaft 14 is mounted rotatably in the housing 15. Furthermore, the input shaft 14 is mechanically operatively connected to the electric motor 7 and is arranged coaxially with respect to the output shaft 16. The gearing 12 of the present embodiment further comprises the coupling element 84 for providing a permanently non-rotatable connection between the ring gear 83 of the second planetary gear set 80 and the planetary carrier 72 of the first planetary gear set 70. In the present embodiment, the non-rotatable connection is provided by positive locking on both sides. That is, the non-rotatable connection to the ring gear 83 of the second planetary gear set 80 is provided by teeth radially extending from an outer circumference of the coupling element 84 into corresponding grooves provided in the ring gear 83 of the second planetary gear set 80. Likewise, the non-rotatable connection to the planetary carrier 72 of the first planetary gear set 70 is presently provided by teeth radially extending from an inner circumference of the coupling element 84 into corresponding grooves provided in the planetary carrier 72.

The third element 73 of the first planetary gear set 70 is integrally formed with the first element 81 of the second planetary gear set 80, in the present case as a sun-ring-gear 73, 81. The gearing 12 and the output shaft 16 are accommodated in the housing 15. Here, the output shaft 16 is mounted rotatably in the housing 15 via the planetary carrier 72 of the first planetary gear set 70 by means of a fixed bearing 19. In the present case, the fixed bearing 19 is configured as a double row ball bearing and is fixed both on the planetary carrier 72 and in the housing 15 in an axial direction 90 of the gearing 12. Furthermore, the fixed bearing 19 is configured in such a way that it can receive axial forces of the output shaft 16 in both axial directions 90.

The bearing arrangement of the present embodiment further comprises a supporting apparatus 40 and a holding apparatus 50. The supporting apparatus 40 is presently a plate shaped annular member. The supporting apparatus 40 is permanently non-rotatably connected to the sun-ring-gear 73, 81, presently by a positive locking connection. In the axial direction 90, the supporting apparatus 40 is arranged between the planetary carrier 72 of the first planetary gear set 70 and the holding apparatus 50. In a radial direction 92 of the gearing 12, the supporting apparatus 40 extends from a large diameter at the sun-ring-gear 73, 81 to a smaller diameter at the planetary carrier 72 of the first planetary gear set 70.

A radially inner side of the supporting apparatus 40 (planetary carrier side) extends into a gap 20 formed between a supporting portion 52 of the holding apparatus 50 and a supporting portion 76 of the planetary carrier 72 of the first planetary gear set 70. Accordingly, the supporting portions 52, 76 delimit the gap 20 and set its axial width. The supporting portion 76 is provided as a stepped portion of the planetary carrier 72 of the first planetary gear set 70 and is configured for supporting the supporting apparatus 40 in an axial direction towards the axial middle of the planetary carrier 72. The holding apparatus 50 comprises the supporting portion 52 which is configured for supporting the supporting apparatus 40 in an axial direction away from the axial middle of the planetary carrier 72. The holding apparatus 50 is fixed to an end side of the planetary carrier 72 of the first planetary gear set 70 by a fixing means, presently provided by a plurality of screws 54. In the present embodiment, the distance between the supporting portions 52, 76 is substantially the same as the thickness of the supporting apparatus 40. Accordingly, the supporting apparatus 40 is held without substantial axial play on the side of the planetary carrier 72 of the planetary gear set 70.

A radially outer side of the supporting apparatus 40 (sun-ring-gear side) extends into a further gap 30 formed between a supporting portion 77 of the sun-ring-gear 73, 81 and a retaining ring 32. Accordingly, the supporting portion 77 and the retaining ring 32 delimit the further gap 30 and set its width. The supporting portion 77 is provided as a stepped portion of the sun-ring-gear 73, 81 and is configured for supporting the supporting apparatus 40 in an axial direction towards the axial middle of the sun-ring-gear 73, 81. The retaining ring 32 is configured for supporting the supporting apparatus 40 in an axial direction away from the axial middle of the sun-ring-gear 73, 81. In the present embodiment, the retaining ring 32 is provided at a distance from the supporting portion 77 that is larger than the thickness of the supporting apparatus 40. Accordingly, the supporting apparatus 40 is held so as to allow some axial play on the side of the sun-ring-gear 73, 81. In another embodiment, the supporting apparatus 40 is held without substantial play on the side of the sun-ring-gear 73, 81, and some axial play is permitted on the side of the planetary carrier 72 of the first planetary gear set 70.

The supporting apparatus 40 comprises a treatment which leads to an improvement of the mechanical properties in the region of the gap 20 and the further gap 30. In the present embodiment, the supporting apparatus 40 is hardened, for example, phosphated, in these regions.

A planet 74 is rotatably mounted on the planetary carrier 72 of the first planetary gear set 70 via a planetary pin 75 and a bearing 78. In the present case, the bearing 78 is supplied with lubricant via a lubricant supply (not shown), a lubricant bore 60 axially extending through the planetary pin 75 and a lubricant bore 62 radially extending through the planetary pin 75 to the bearing 78. Part of the lubricant can pass from the bearing 78, through a lubricant passage which is formed between the planet 74 and the planetary carrier 72 on the side of the supporting apparatus 40 and into the gaps 20, 30 on account of pressure and centrifugal forces. Thus, the lubricant can help reduce friction in an axial plain bearing arising between the supporting apparatus 40 and the surfaces delimiting the gap 20 and the further gap 30. Accordingly, sufficient lubrication of sliding contact surfaces of the supporting apparatus 40 is provided by means of said lubricant. Such sufficient lubrication for providing the plain bearing functionality is advantageous since, in the gearing 12 of the present embodiment, a relative rotational speed may be present between the supporting apparatus 40 and the planetary carrier 72 of the first planetary gear set 70 and/or the sun-ring-gear 73, 81. While the gearing 12 of the present embodiment is configured in such a way that the relative rotational speeds between the supporting apparatus 40 and sliding surfaces in the gaps 20, 30 are low, a suitable lubrication still leads to a reduction in frictional losses and an increase in the service life of the gearing 12.

In the present embodiment, a meshing engagement between the planets 74 of the planetary carrier 72 of the first planetary gear set 70 with the sun-ring-gear 73, 81, and a meshing engagement between the sun-ring-gear 73, 81 with the planets of the planetary carrier 82 of the second planetary gear set 80 are each configured as helically toothed. The helical teeth, for example the angles of the teeth, of the meshing engagements are adapted to one another such that a resulting axial force which is applied by the helical teeth to the sun-ring-gear 73, 81 is substantially 0. As a result, the axial forces substantially cancel each other out. Thereby, frictional losses in the plain bearing are further reduced.

Figure 4 shows a general layout of the gearing according to an embodiment. The general layout shown in Figure 4 corresponds to the general layout shown in Figure 2 with the exception of the following differences. Instead of being coupled to a coupling element, the third element 83 of the second planetary gear set 80 is non-rotatably coupled to a further output shaft 18. Accordingly, the gearing 12 with the general layout according to Figure 4 provides a splitting function for splitting torque applied to the input shaft 14 between the output shaft 16 and the further output shaft 18. The gearing of Figure 4 also provides a differential function.

Figure 5 schematically shows a bearing arrangement of a driving arrangement 1 comprising a gearing 12 which is interconnected according to the general layout of Figure 2. The embodiment shown in Figure 5 corresponds to the embodiment shown in Figure 3 with the exception of the following differences. In the embodiment of Figure 3, the supporting apparatus 40 is coupled to the sun-ring-gear 73, 81 of the first planetary gear set 70 by being mounted to the further gap 30. By contrast, in the embodiment of Figure 5, the supporting apparatus 40 is coupled to the sun-ring-gear 73, 81 by being press fitted thereto. Furthermore, the gap 20 formed between the planetary carrier 72 of the first planetary gear set 70 and the holding apparatus 50 allows some play in the axial and radial directions. In addition, the non-rotatable connection between the coupling element 84 and the second element 72 of the first planetary gear set 70 is provided in the present embodiment by joining, specifically by welding an inner circumference of the coupling element 84 to the second element 72. The present embodiment of Figure 5 provides the advantages and other features of the embodiment of Figure 3 with a configuration that is easy to manufacture.

### Reference signs

- 1: driving arrangement
- 7: driving unit
- 8, 9: drive element
- 12: gearing
- 14: input shaft
- 15: stationary member
- 16, 18: output shaft
- 17: spline
- 19: fixed bearing
- 20, 30: gap
- 32: retaining ring
- 40: supporting apparatus
- 50: holding apparatus
- 52: supporting portion
- 54: fixing means
- 60, 62: lubricant bore
- 70, 80: planetary gear set
- 71, 81: sun gear
- 72, 82: planetary carrier
- 73, 83: ring gear
- 74: planet
- 75: planetary pin
- 76, 77: supporting portion
- 78: planetary bearing
- 84: coupling element
- 90: axial direction
- 92: radial direction
- 100: vehicle

## Claims

1. A bearing arrangement for a driving arrangement (1) of a vehicle (100), comprising a gearing (12) which comprises a planetary gear device (70, 80) with a plurality of elements (71, 72, 73, 81, 82, 83) for transmitting torque and an output shaft (16), one of the elements (72) of the planetary gear device (70, 80) being non-rotatably connected to the output shaft (16) and a further element (73, 81) of the planetary gear device (70, 80) being displaced with respect to the one element (72) of the planetary gear device (70, 80), wherein the bearing arrangement further comprises a supporting apparatus (40) extending from the further element (73, 81) to the one element (72) of the planetary gear device (70, 80) for transmitting an axial force of the further element (73, 81) to the one element (72) of the planetary gear device (70, 80) in opposite axial directions.

2. The bearing arrangement according to claim 1, **characterized in that** bearing arrangement comprises a holding apparatus (50) mounting the supporting apparatus (40) without any axial play in a gap formed between the holding apparatus (50) and one of the one element (72) and the further element (73, 81) of the planetary gear device (70, 80).

3. The bearing arrangement according to claim 2, **characterized in that** the other one of the one element (72) and the further element (73, 81) of the planetary gear device (70, 80) provides an axial play for the supporting apparatus (40).

4. The bearing arrangement according to claim 3, **characterized in that** the other one of the one element (72) and the further element (73, 81) provides a further gap to provide the axial play that is axially delimited on one axial side by means of a retaining ring (32).

5. The bearing arrangement according to one of claims 3 and 4, **characterized in that** the supporting apparatus (40) is permanently non-rotatably connected to the other one of the one element (72) and the further element (73, 81) of the planetary gear device (70, 80).

6. The bearing arrangement according to any one of claims 2 to 5, **characterized in that** holding apparatus (50) mounts the supporting apparatus (40) to the one element (72) of the planetary gear device (70, 80) that is non-rotatably connected to the output shaft (16).

7. The bearing arrangement according to any one of the preceding claims, **characterized in that** the supporting apparatus (40) is configured as a plate-shaped member.

8. The bearing arrangement according to any one of the preceding claims, **characterized in that** the holding apparatus (50) is configured as a plate-shaped member.

9. The bearing arrangement according to any one of the preceding claims, **characterized in that** the supporting apparatus (40) comprises a treatment for improving the mechanical properties.

10. The bearing arrangement according to any one of the preceding claims, **characterized in that** a plurality of elements (72, 73, 81, 82) of the planetary gear device (70, 80) mesh with one another with helical teeth which are adapted to one another such that the axial forces which are applied by them to the further element (73, 81) of the planetary gear device (70, 80) substantially cancel each other out.

11. The bearing arrangement according to any one of the preceding claims, **characterized in that** the planetary gear device comprises a first planetary gear set (70), a second planetary gear set (80) that is mechanically coupled to the first planetary gear set (70) and an input shaft (14) mechanically coupled to one of the planetary gear sets (70; 80), wherein the output shaft (16) is mechanically coupled to one of the planetary gear sets (70; 80).

12. The bearing arrangement according to claim 11, **characterized in that** both planetary gear sets (70, 80) each comprise a first element (71, 81), a second element (72, 82) and a third element (73, 83), wherein a torque can be introduced into the gearing (12) via the first element (71) of the first planetary gear set (70), the third element (73) of the first planetary gear set (70) is permanently non-rotatably connected to the first element (81) of the second planetary gear set (80), the second element (82) of the second planetary gear set (80) is permanently non-rotatably fixed to a stationary member (15), the output shaft (16) is permanently non-rotatably connected to the second element (72) of the first planetary gear set (70) and the third element (83) of the second planetary gear set (80) is permanently non-rotatably connected to the second element (72) of the planetary gear set (70) or to a further output shaft (18).

13. The bearing arrangement according to claim 12, **characterized in that** the first elements (71, 81) of the two planetary gear sets (70, 80) are each configured as a sun gear, the second elements (72, 82) of the two planetary gear sets (70, 80) are each configured as a planetary carrier and the third elements (73, 83) of the two planetary gear sets (70, 80) are each configured as a ring gear.

14. The bearing arrangement according to claim 13, **characterized in that** the one element (72) of the planetary gear device (70, 80) is the second element (72) of the first planetary gear set (70) and the further element (73, 81) of the planetary gear device (70, 80) is the third element (73) of the first planetary gear set (70).

15. A vehicle (100) comprising a bearing arrangement according to any one of the preceding claims.

## Amended claims

### Amended claims in accordance with Rule 137(2) EPC.

1. A bearing arrangement for a driving arrangement (1) of a vehicle (100), comprising a gearing (12) which comprises a planetary gear device (70, 80) with a plurality of elements (71, 72, 73, 81, 82, 83) for transmitting torque and an output shaft (16), one of the elements (72) of the planetary gear device (70, 80) being non-rotatably connected to the output shaft (16) and a further element (73, 81) of the planetary gear device (70, 80) being displaced with respect to the one element (72) of the planetary gear device (70, 80), wherein the bearing arrangement further comprises a supporting apparatus (40) extending from the further element (73, 81) to the one element (72) of the planetary gear device (70, 80) for transmitting an axial force of the further element (73, 81) to the one element (72) of the planetary gear device (70, 80) in opposite axial directions such that forces of the further element (73, 81) in both axial directions are transferable to the one element (72) of the planetary gear device (70, 80) via the supporting apparatus (40).

2. The bearing arrangement according to claim 1, **characterized in that** bearing arrangement comprises a holding apparatus (50) mounting the supporting apparatus (40) without any axial play in a gap (20) formed between the holding apparatus (50) and one of the one element (72) and the further element (73, 81) of the planetary gear device (70, 80).

3. The bearing arrangement according to claim 2, **characterized in that** the other one of the one element (72) and the further element (73, 81) of the planetary gear device (70, 80) provides an axial play for the supporting apparatus (40).

4. The bearing arrangement according to claim 3, **characterized in that** the other one of the one element (72) and the further element (73, 81) provides a further gap (30) to provide the axial play that is axially delimited on one axial side by means of a retaining ring (32).

5. The bearing arrangement according to one of claims 3 and 4, **characterized in that** the supporting apparatus (40) is permanently non-rotatably connected to the other one of the one element (72) and the further element (73, 81) of the planetary gear device (70, 80).

6. The bearing arrangement according to any one of claims 2 to 5, **characterized in that** holding apparatus (50) mounts the supporting apparatus (40) to the one element (72) of the planetary gear device (70, 80) that is non-rotatably connected to the output shaft (16).

7. The bearing arrangement according to any one of the preceding claims, **characterized in that** the supporting apparatus (40) is configured as a plate-shaped member.

8. The bearing arrangement according to any one of the preceding claims, **characterized in that** the holding apparatus (50) is configured as a plate-shaped member.

9. The bearing arrangement according to any one of the preceding claims, **characterized in that** the supporting apparatus (40) comprises a treatment for improving the mechanical properties.

10. The bearing arrangement according to any one of the preceding claims, **characterized in that** a plurality of elements (72, 73, 81, 82) of the planetary gear device (70, 80) mesh with one another with helical teeth which are adapted to one another such that the axial forces which are applied by them to the further element (73, 81) of the planetary gear device (70, 80) substantially cancel each other out.

11. The bearing arrangement according to any one of the preceding claims, **characterized in that** the planetary gear device comprises a first planetary gear set (70), a second planetary gear set (80) that is mechanically coupled to the first planetary gear set (70) and an input shaft (14) mechanically coupled to one of the planetary gear sets (70; 80), wherein the output shaft (16) is mechanically coupled to one of the planetary gear sets (70; 80).

12. The bearing arrangement according to claim 11, **characterized in that** both planetary gear sets (70, 80) each comprise a first element (71, 81), a second element (72, 82) and a third element (73, 83), wherein a torque can be introduced into the gearing (12) via the first element (71) of the first planetary gear set (70), the third element (73) of the first planetary gear set (70) is permanently non-rotatably connected to the first element (81) of the second planetary gear set (80), the second element (82) of the second planetary gear set (80) is permanently non-rotatably fixed to a stationary member (15), the output shaft (16) is permanently non-rotatably connected to the second element (72) of the first planetary gear set (70) and the third element (83) of the second planetary gear set (80) is permanently non-rotatably connected to the second element (72) of the first planetary gear set (70) or to a further output shaft (18).

13. The bearing arrangement according to claim 12, **characterized in that** the first elements (71, 81) of the two planetary gear sets (70, 80) are each configured as a sun gear, the second elements (72, 82) of the two planetary gear sets (70, 80) are each configured as a planetary carrier and the third elements (73, 83) of the two planetary gear sets (70, 80) are each configured as a ring gear.

14. The bearing arrangement according to claim 13, **characterized in that** the one element (72) of the planetary gear device (70, 80) is the second element (72) of the first planetary gear set (70) and the further element (73, 81) of the planetary gear device (70, 80) is the third element (73) of the first planetary gear set (70).

15. A vehicle (100) comprising a bearing arrangement according to any one of the preceding claims.
